# EUROPÄISCHE PATENTSCHRIFT

(11) **EP 1 330 954 B1**
(45) Veröffentlichungstag und Bekanntmachung des Hinweises auf die Patenterteilung: **19.04.2006**
(21) Anmeldenummer: 02001633.3
(22) Anmeldetag: 24.01.2002
(51) Int. Cl.: A22C 11/04, A22C 7/00

(54) **Verfahren zur Behandlung von Fleisch- oder Wurstwaren**
Method for treating meat and sausages
Procédé pour traiter de la viande et des saucisses

(43) Veröffentlichungstag der Anmeldung: 30.07.2003
(73) Patentinhaber: Schröder Maschinenbau KG, 33824 Werther (DE)
(72) Erfinder: Schröder, Helmut, 33824 Werther (DE)
(74) Vertreter: TER MEER - STEINMEISTER & PARTNER GbR

(56) Entgegenhaltungen:
- EP-A- 0 106 078
- WO-A-01/37674
- DD-A- 200 970
- FR-A- 2 755 582
- US-A- 3 661 072

## Beschreibung

Die Erfindung betrifft eine Vorrichtung zur Behandlung von Fleisch- oder Wurstwaren, mit mindestens einer Bearbeitungsstation zum Behandeln der Fleisch- oder Wurstwaren, beispielsweise zum Pökeln oder Massieren derselben, und mit einem Förderer zum An- oder Abtransport der Fleisch- oder Wurstwaren zu der oder von der Bearbeitungsstation.

Aufgabe der Erfindung ist es, die Qualität der Fleisch- und Wurstwaren zu verbessern.

Diese Aufgabe wird erfindungsgemäß dadurch gelöst, daß der Förderer ein Element aufweist, auf dem die Fleisch- oder Wurstwaren aufliegen, und daß an diesem Element ein Vibrator angeordnet ist, der es in mechanische Schwingungen versetzt.

Versuche haben gezeigt, daß eine solche Vibrationsbehandlung bei Fleischwaren die Bindung innerhalb des Muskelgewebes und bei Wurstwaren die Bindung zwischen den verschiedenen Komponenten der Wurst verbessert und außerdem zu einer gleichmäßigeren Verteilung von Flüssigkeiten innerhalb des Gewebes bzw. der Wurst führt. Darüber hinaus kann die Vibrationsbehandlung dazu beitragen, das Muskelgewebe mürbe zu machen, so daß die Wirkung herkömmlicher Behandlungsverfahren, etwa des Massierens von Fleisch in Schlag-, Walz- oder Trommelvorrichtungen, ergänzt oder sogar ganz ersetzt werden kann.

Aus EP 0 106 078 ist eine Vorrichtung mit einer Vakuumkammer bekannt, in der Fleisch in einen Formbehälter gepresst und dabei zwecks Verdichtung einer Vibrationsbehandlung unterzogen wird. Die Vorrichtung arbeitet mit einem Spannrastdeckel am Formbehälter.

DD 2 009 701 beschreibt eine ähnliche Vorrichtung zum Füllen von Brät in eine Kartusche, die dabei Vibrationen ausgesetzt ist, um Lufteinschlüsse auszutreiben.

Aus FR 2 755 582 ist es bekannt, in Formbehältern unter Pressung stehendes Formpökelfleisch zur Reifung auf einem in Vibration versetzten Regal zu lagern.

Während sich die genannten Druckschriften mit dem Pressen von Fleisch- oder Wurstwaren in Formbehälter befassen, beschreibt US 3 661 072 einen Handapparat zur Injektion von Flüssigkeiten in Fleisch. Der Apparat weist eine Vielzahl von Injektionsnadeln auf und wird in Vibration versetzt, um das Eindringen der Nadeln in das Fleisch zu erleichtern.

Schließlich ist aus WO 01/37674 ein Geflügelförderer bekannt, mit dem in einem Schlachthaus einzeln aufgehängtes Geflügel durch eine Station befördert wird, an der das Geflügel einer Schall- oder Ultraschallbehandlung unterzogen wird. Diese Behandlung erfolgt mit einem sich um das Geflügel schließenden Kasten eines Karussels oder in einem Bad, durch das das Geflügel transportiert wird.

Eine vorteilhafte Anwendung der erfindungsgemäßen Vibrationsbehandlung ist das Pökeln von Fleisch oder - allgemeiner - die Injektion von Flüssigkeiten in Fleisch- oder Wurstwaren. Hier wird vor allen der Effekt ausgenutzt, daß die Vibrationsbehandlung zu einer gleichmäßigeren Verteilung der Flüssigkeiten im Produkt führt. Wenn beispielsweise Pökellake in einer Pökelmaschine mit Nadeln in das Fleisch injiziert wird, so bewirkt die anschließende Vibrationsbehandlung, daß sich die Lake gleichmäßiger im Produkt verteilt und folglich eine gleichmäßigere Pökelwirkung erzielt wird. Die Vibrationsbehandlung wird dabei während des Transportes des Fleisches auf einem Förderer erfolgen.

Eine vorteilhafte Ausgestaltung ergibt sich aus dem Unteranspruch.

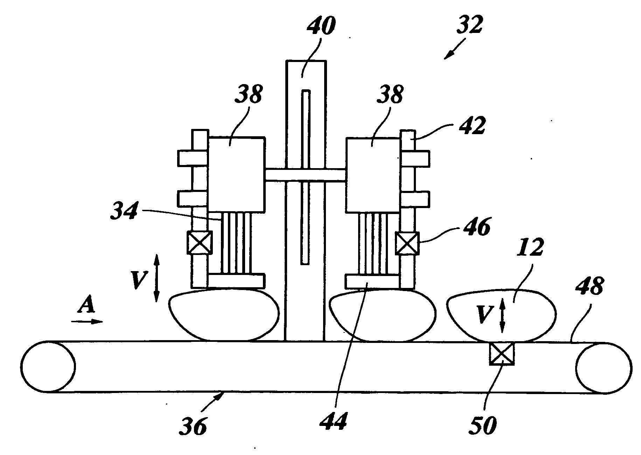

Im folgenden werden Ausführungsbeispiele der Erfindung anhand der Zeichnung näher erläutert.

Die einzige Figur zeigt den prinzipiellen Aufbau einer Pökelmaschine 32, die dazu dient, Pökellake mit Hilfe von Nadeln 34 in Fleischstücke 12 zu injizieren, die mit Hilfe eines Förderers 36 schrittweise in Richtung des Pfeils A zu- und abtransportiert werden. Die Nadeln 34 sind an zwei Nadelregistern 38 angeordnet, die vertikalbeweglich an einem Rahmen 40 geführt sind und mit Hilfe eines nicht gezeigten Antriebs auf und ab bewegt werden, so daß die Nadeln 34 in die auf dem Förderer 36 befindlichen Fleischstücke einstechen. Die Nadelregister 38 sind außerdem mit einem nicht gezeigten Lakezufuhrsystem verbunden, über das Lake aus den hohlen Nadeln 34 ausgepreßt wird, während die Nadeln in das Fleisch einstechen.

An jedem Nadelregister 38 ist vertikalbeweglich ein Halter 42 geführt, der am unteren Ende einen von den Nadeln 34 durchsetzten Abstreifer 44 trägt. Die Halter 42 und die daran befestigten Abstreifer 44 sind elastisch, hydraulisch oder pneumatisch nach unten vorgespannt und haben die Funktion, die Fleischstücke 12 auf dem Förderer 36 zu halten und von den Nadeln 34 abzustreifen, wenn diese nach oben zurückgezogen werden. Insoweit entspricht die Konstruktion der Pökelmaschine dem Stand der Technik.

Außerdem ist in jeden Halter 42 ein Vibrator 46 integriert, der den Abstreifer 44 in vertikale Schwingungen V versetzt, während dieser auf dem betreffenden Fleischstück 12 aufliegt. Die Schwingungen werden auf das Fleischstück 12 übertragen, und bewirken, daß sich die mit Hilfe der Nadeln 34 injizierte Lake gleichmäßig in den Fleischstücken 12 verteilt.

Der Förderer 36 ist im gezeigten Beispiel als Bandförderer ausgebildet. Unter dem oberen Trumm 48 dieses Bandförderers ist in Transportrichtung hinter den Nadelregistern 38 erfindungsgemäß ein Vibrator 50 angeordnet, der den oberen Trumm 48 und die darauf befindlichen Fleischstücke 12 in vertikale Schwingungen versetzt. Auf diese Weise wird die gleichmäßige Verteilung der Lake in den Fleischstücken 12 weiter unterstützt.

Der Förderer 36 mit dem Vibrator 50 kann auch unabhängig von der Pökelmaschine 32 dazu eingesetzt werden. Fleischstücke 12 von einer Verarbeitungsstation zur nächsten zu transportieren und sie dabei einer Vibrationsbehandlung zu unterziehen. Anstelle eines Bandförderers können auch Förderer mit einer anderen bekannten Konstruktion verwendet werden, beispielsweise Balkenförderer mit einem Balkengatter, das die Fleischstücke 12 anhebt, ein Stück weiter transportiert und sie dann wieder auf einer Unterlage absetzet. In diesem Fall können Vibratoren an dem Gatter oder der Unterlage angeordnet sein. Ebenso ist es denkbar, den Förderer nach Art eines bekannten Schwingförderers auszubilden, beispielsweise in der Form einer ortsfesten Förderrinne, die mit Hilfe des Vibrators in elliptische oder sägezahnförmige Schwingungen versetzt wird. Diese Schwingungen bewirken dann die Vibrationsbehandlung und zugleich den Transport der Fleischstücke in der gewünschten Richtung.

## Patentansprüche

1. Vorrichtung zur Behandlung von Fleisch- oder Wurstwaren (12), mit mindestens einer Bearbeitungsstation (32) zum Behandeln der Fleisch- oder Wurstwaren und mit einem Förderer (36) zum An- oder Abtransport der Fleisch- oder Wurstwaren zu der oder von der Bearbeitungsstation (32), **dadurch gekennzeichnet, daß** der Förderer (36) ein Element (48) aufweist, auf dem die Fleisch- oder Wurstwaren (12) aufliegen, und daß an diesem Element (48) ein Vibrator (50) angeordnet ist, der es in Schwingungen versetzt.

2. Vorrichtung nach Anspruch 1, **dadurch gekennzeichnet, daß** der Förderer (36) ein Bandförderer ist und daß der Vibrator (50) auf einen die Fleisch- oder Wurstwaren (12) aufnehmenden Trumm (48) des Förderbandes wirkt.

## Claims

1. A device for treating meat products or sausage products (12), having at least one processing station (32) for treating the meat products or sausage products and having a conveyor (36) for transporting the meat products or sausage products to or from the processing station (32), **characterised in that** the conveyor (36) comprises an element (48) on which the meat products or sausage products (12) lie, and **in that** arranged on this element (48) is a vibrator (50) that causes the element to vibrate.

2. A device according to claim 1, **characterised in that** the conveyor (36) is a belt conveyor and **in that** the vibrator (50) acts on a run (48) of the conveyor belt receiving the meat products or sausage products (12).

## Revendications

1. Dispositif pour traiter des produits de boucherie ou de charcuterie (12), comportant au moins un poste de traitement (32) pour traiter les produits de boucherie ou de charcuterie et comportant un convoyeur (36) pour amener ou évacuer les produits de boucherie ou de charcuterie vers le poste de traitement (32) ou depuis celui-ci, **caractérisé en ce que** le convoyeur (36) comporte un élément (48) sur lequel les produits de boucherie ou de charcuterie (12) reposent, et **en ce que** sur cet élément (48) est disposé un vibreur (50) qui le fait vibrer.

2. Dispositif selon la revendication 1, **caractérisé en ce que** le convoyeur (36) est un convoyeur à bande et **en ce que** le vibreur (50) agit sur un brin (48) de la bande de transport qui reçoit les produits de boucherie ou de charcuterie (12).
